# EUROPEAN PATENT APPLICATION

(11) **EP 4 553 792 A1**
(43) Date of publication of application: **14.05.2025**
(21) Application number: 23208531.6
(22) Date of filing: 08.11.2023
(51) Int. Cl.: G06V 20/56, G06V 10/70, G06V 10/80, G06V 20/70, G06V 10/778

(54) **AUTOMATED DATA ANNOTATION FOR MACHINE LEARNING APPLICATIONS**

(71) Applicant: Zenseact AB, 417 56 Göteborg (SE)
(72) Inventor: VERBEKE, Willem, 412 60 Göteborg (SE); GUSTAFSSON, Niklas, 421 49 Västra Frölunda (SE)
(74) Representative: Zacco Sweden AB

(57) **Abstract**

A computer-implemented method for a vehicle comprising a sensor system having a plurality of sensor devices for monitoring a surrounding environment of the vehicle and related aspects are disclosed. The plurality of sensor devices comprises a plurality of subsets of sensor devices, each subset of sensor devices comprising a different subset of sensor devices of the plurality of sensor devices relative to other subsets of sensor devices. Each subset of sensor devices of the plurality of sensor devices is related to a respective machine learning algorithm configured to consume an output from the related subset of sensor devices and to output a perception output, the perception output being associated with a confidence metric. The method comprises in response to the confidence metric associated with a first perception output of a first machine learning algorithm being below a first confidence value and the confidence metric associated with a second perception output of a second machine learning algorithm exceeding a second confidence value for a common scene, annotating sensor data consumed by the first machine learning algorithm to generate the first perception output based on the second perception output of the second machine learning algorithm.

## Description

### TECHNICAL FIELD

The disclosed technology relates to computer-implemented methods, systems and other aspects for automated data annotation for training of machine learning (ML) algorithms configured to solving perception tasks. In particular, the disclosed technology relates to automated data annotation for providing training data for machine learning algorithms configured to solve perception tasks for Automated Driving Systems.

### BACKGROUND

Machine learning (ML) algorithms and neural networks (NN) have gained a strong position in solving complicated problems in various domains such as classification, detection, identification, and segmentation tasks to name a few. The ability of these algorithms to perform complex and multidimensional tasks involving almost infinite data variations and combinations makes these models unequivocally well suited for the evermore-expanding big data applications of today. One specific area for which utilization of neural networks and deep learning models has presented ground-breaking possibilities is the emergence of Automated Driving Systems for vehicles.

During the last few years, the research and development activities related to autonomous vehicles have exploded in number and many different approaches are being explored. An increasing portion of modern vehicles have advanced driver-assistance systems (ADAS) to increase vehicle safety and more generally road safety. ADAS - which for instance may be represented by adaptive cruise control (ACC) collision avoidance system, forward collision warning, etc. - are electronic systems that may aid a driver of a vehicle. Today, there is ongoing research and development within a number of technical areas associated to both the ADAS and the Autonomous Driving (AD) fields. ADAS and AD will herein be referred to under the common term Automated Driving System (ADS) corresponding to all of the different levels of automation as for example defined by the SAE J3016 levels (0 - 5) of driving automation.

ADS solutions have already found their way into a majority of the new cars on the market with utilization prospects being only on the rise in the future. An ADS may be construed as a complex combination of various components that can be defined as systems where perception, decision making, and operation of the vehicle are performed by electronics and machinery instead of or in tandem with a human driver, and as introduction of automation into road traffic. This includes handling of the vehicle, destination, as well as awareness of surroundings. While the automated system has control over the vehicle, it allows the human operator to leave all or at least some responsibilities to the system. An ADS commonly combines a variety of sensors to perceive the vehicle's surroundings, such as e.g. radar, LIDAR, sonar, camera, navigation system e.g. GPS, odometer and/or inertial measurement units (IMUs), upon which advanced control systems may interpret sensory information to identify appropriate navigation paths, as well as obstacles, free-space areas, and/or relevant signage.

An imperative aspect of achieving reliable autonomous functionality for the intended autonomous and semi-autonomous vehicles is to obtain a comprehensive understanding of the scenarios occurring in the surrounding environment of the vehicle. The unpredictable and dynamic scenarios including situations, events or objects in the surrounding environment of the vehicle and on the roads on which the vehicle is travelling can involve nearly endless varieties and complexities.

Machine learning algorithms have been used to some extent for characterization of such complex scenarios. However, deep learning algorithms rely heavily on stringent training and verification schemes involving collecting and labelling a large amount of data representing various scenarios.

There is thus a constant need in the art for novel and improved solutions and applications for providing training data in an efficient and cost-effective manner for utilization of neural networks for characterization of complex and rare scenarios, with high accuracy, speed and certainty.

### SUMMARY

The herein disclosed technology seeks to mitigate, alleviate or eliminate one or more of the deficiencies and disadvantages in the prior art to address various problems relating to providing efficient and cost-effective solutions for generating training data for automated driving applications.

In particular, it is an object of the herein disclosed technology to provide a method and a system for automatically annotating sensor data to be used as training data for training machine learning algorithms used in ADS applications for solving perception tasks.

Various aspects and embodiments of the disclosed invention are defined below and in the accompanying independent and dependent claims.

A first aspect of the disclosed technology comprises a computer-implemented method for a vehicle comprising a sensor system having a plurality of sensor devices for monitoring a surrounding environment of the vehicle. The plurality of sensor devices comprises a plurality of subsets of sensor devices, each subset of sensor devices comprising a different subset of sensor devices of the plurality of sensor devices relative to other subsets of sensor devices. Each subset of sensor devices of the plurality of sensor devices is related to a respective machine learning algorithm configured to consume an output from the related subset of sensor devices and to output a perception output, the perception output being associated with a confidence metric. The method comprises in response to the confidence metric associated with a first perception output of a first machine learning algorithm being below a first confidence value and the confidence metric associated with a second perception output of a second machine learning algorithm exceeding a second confidence value for a common scene, annotating sensor data consumed by the first machine learning algorithm to generate the first perception output based on the second perception output of the second machine learning algorithm.

A second aspect of the disclosed technology comprises a computer program product comprising instructions which, when the program is executed by a computer, causes the computer to carry out the method according to any one of the embodiments of the first aspect disclosed herein. With this aspect of the disclosed technology, similar advantages and preferred features are present as in the other aspects.

A third aspect of the disclosed technology comprises a (non-transitory) computer-readable storage medium comprising instructions which, when executed by a computer, causes the computer to carry out the method according to any one of the embodiments of the first aspect disclosed herein. With this aspect of the disclosed technology, similar advantages and preferred features are present as in the other aspects.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

A fourth aspect of the disclosed technology comprises an annotation system for a vehicle comprising a sensor system having a plurality of sensor devices for monitoring a surrounding environment of the vehicle. The plurality of sensor devices comprises a plurality of subsets of sensor devices, each subset of sensor devices comprising a different subset of sensor devices of the plurality of sensor devices relative to other subsets of sensor devices. Each subset of sensor devices of the plurality of sensor devices is related to a respective machine learning algorithm configured to consume an output from the related subset of sensor devices and to output a perception output, the perception output being associated with a confidence metric. The annotation system further comprises control circuitry configured to in response to the confidence metric associated with a first perception output of a first machine learning algorithm being below a first confidence value and the confidence metric associated with a second perception output of a second machine learning algorithm exceeding a second confidence value for a common scene, annotate sensor data consumed by the first machine learning algorithm to generate the first perception output based on the second perception output of the second machine learning algorithm. With this aspect of the disclosed technology, similar advantages and preferred features are present as in the other aspects.

A fifth aspect of the disclosed technology comprises a vehicle comprising an apparatus according to any one of the embodiments disclosed herein. With this aspect of the disclosed technology, similar advantages and preferred features are present as in the other aspects.

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect.

An advantage of some embodiments is that significant time saving can be achieved for generating large annotated datasets of sensor output for subsequent training of machine learning algorithms.

An advantage of some embodiments is that more rapid development of machine learning models for solving perception tasks for Automated Driving Systems may be achieved.

An advantage of some embodiments is that the performance of machine learning models for solving perception tasks for Automated Driving Systems may be improved in a more time-efficient and cost-effective manner.

Further embodiments are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the disclosed technology will in the following be further clarified with reference to the embodiments described hereinafter.

### BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings, in which:
Fig. 1 is a schematic flowchart representation of a method for annotating sensor data for machine learning tasks in accordance with some embodiments.
Fig. 2 is a schematic block diagram representation of a system for annotating sensor data for machine learning tasks in accordance with some embodiments.
Fig. 3 is a schematic illustration of a vehicle comprising a system for annotating sensor data for machine learning tasks in accordance with some embodiments.

### DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general-purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus comprising one or more processors, one or more memories coupled to the one or more processors, where computer code is loaded to implement the method. For example, the one or more memories may store one or more computer programs that causes the apparatus to perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. Accordingly, it should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative. Similarly, the phrase "at least one of A, B and C" (may also be referred to as "one or more of A, B, and C") is to be interpreted as only A, only B, only C, both A and B, both A and C, both B or C, or all of A, B, and C. Moreover, a set of elements or subset of elements should be construed as one or more elements.

It will also be understood that, although the term first, second, etc. may be used herein to describe various elements or features, these elements should not be limited by these terms. These terms are only used to distinguish one element from another. For example, a first signal could be termed a second signal, and, similarly, a second signal could be termed a first signal, without departing from the scope of the embodiments. The first signal and the second signal are both signals, but they are not the same signal.

### Definitions

In the present context, an Automated Driving System (ADS) refers to a complex combination of hardware and software components designed to control and operate a vehicle without direct human intervention. ADS technology aims to automate various aspects of driving, such as steering, acceleration, deceleration, and monitoring of the surrounding environment. The primary goal of an ADS is to enhance safety, efficiency, and convenience in transportation. An ADS can range from basic driver assistance systems to highly advanced autonomous driving systems, depending on its level of automation, as classified by standards like the SAE J3016. These systems use a variety of sensors, cameras, radars, lidars, and powerful computer algorithms to perceive the environment and make driving decisions. The specific capabilities and features/functions of an ADS can vary widely, from systems that provide limited assistance to those that can handle complex driving tasks independently in specific conditions.

In the present context, a "sensor device" refers to a specialized component or system that is designed to capture and gather information from the vehicle's surroundings. These sensors play a crucial role in enabling the ADS to perceive and understand their environment, make informed decisions, and navigate safely. Sensor devices are typically integrated into the autonomous vehicle's hardware and software systems to provide real-time data for various tasks such as obstacle detection, localization, road model estimation, and object recognition. Common types of sensor devices used in autonomous driving include LiDAR (Light Detection and Ranging), Radar, Cameras, and Ultrasonic sensors. LiDAR sensors use laser beams to measure distances and create high-resolution 3D maps of the vehicle's surroundings. Radar sensors use radio waves to determine the distance and relative speed of objects around the vehicle. Camera sensors capture visual data, allowing the vehicle's computer system to recognize traffic signs, lane markings, pedestrians, and other vehicles. Ultrasonic sensors use sound waves to measure proximity to objects. Various machine learning algorithms (such as e.g., artificial neural networks) may be employed to process the output from the sensors to make sense of the environment.

In the present context, a "Machine Learning Algorithm" refers to a computational model or set of techniques that are used to enable a computer to solve a task, such as for example, the vehicle's perception system to interpret and understand the surrounding environment. Perception tasks in ADS involve the vehicle's ability to detect and recognize objects, obstacles, road signs, lane markings, pedestrians, other vehicles, and various environmental conditions. The ADS uses machine learning algorithms to process sensor data, such as data from cameras, lidar, radar, and other sensors, to make informed decisions about how to navigate safely. These algorithms use data-driven techniques to analyse and classify objects, understand the road geometry, predict the movement of other road users, and/or assess potential risks in real-time. Common types of machine learning algorithms used in ADS perception tasks include deep neural networks, convolutional neural networks (CNNs) (e.g., for camera image processing, lidar output processing, etc.), recurrent neural networks (RNNs) (e.g., for sequence data), and various other techniques like support vector machines (SVM) and decision trees. The machine-learning algorithms (may also be referred to as machine-learning models, neural networks, and so forth) are implemented in some embodiments using publicly available suitable software development machine learning code elements, for example, such as those which are available in Pytorch, Keras and TensorFlow or in any other suitable software development platform, in any manner known to be suitable to someone of ordinary skill in the art.

In the present context, a "confidence metric" ("confidence score") may be understood as a quantitative measure that assesses the reliability or certainty of a machine learning algorithm's output or prediction (i.e., the "perception output"). It provides an indication of how much trust can be placed in the machine learning algorithm's decision, particularly when dealing with perception tasks such as object detection, path planning, lane tracing, or obstacle avoidance. The confidence metric may be utilized by the ADS to help the system understand the level of certainty in the machine learning algorithm's predictions, allowing the ADS to make safer and more informed decisions. For example, a high-confidence prediction may indicate a clear and unambiguous detection of an object or lane marking, while a low-confidence prediction may suggest uncertainty or ambiguity in the model's perception. The confidence metric can be derived from various sources, depending on the specific task and the architecture of the neural network. An example method for obtaining a confidence metric of an ML algorithm's output includes the use of an uncertainty estimation where the machine learning algorithm can be designed to estimate their own uncertainty by predicting confidence intervals or probabilistic distributions over possible outcomes. A high uncertainty suggests a low confidence in the machine learning algorithm's prediction (i.e., in the perception output) while a low uncertainty suggests a high confidence in the machine learning algorithm's prediction. In other words, in some embodiments, the perception output comprises the associated confidence metric.

However, in some embodiments, the confidence metric of an ML algorithm's output is derived based on the output from the ML algorithm and the input to the machine learning algorithm. For example, one may obtain a confidence metric of an ML algorithm's output using historical data. In more detail, one can use the machine learning algorithms' historical data and past performance to assess their confidence in a current prediction. If the ML algorithm has been consistently accurate in similar situations, it may have higher confidence. Another example method for obtaining a confidence metric of an M L algorithm's output includes the use of data consistency, were the confidence can be based on the consistency of the ML algorithm's output over time. Sudden or inconsistent changes in predictions may trigger lower confidence scores. Another example method for obtaining a confidence metric of an ML algorithm's output includes the use of feature quality. For example, if a model relies on specific features or characteristics of objects in the environment, the quality and visibility of those features can be used to calculate the confidence metric. Another example method of obtaining a confidence metric of an ML algorithm's output includes the use of "entropy". In more detail, "entropy" may be understood a measure of uncertainty or disorder in a dataset or the output of a model, and it may be used to quantify the amount of information or randomness in a set of data, particularly in the context of probability and information theory. Using "entropy" to derive a confidence metric is particularly suitable for classification tasks. For example, an ML algorithm trained to classify objects may output the following set of probabilities: {nothing:0.1, car: 0.9, pedestrian: 0}. The output may accordingly be construed as a probability distribution from which the entropy may be calculated. The narrower the distribution (i.e., the higher one value is and the lower the other values are) the lower the entropy. Moreover, the entropy may be a normalized entropy value.

The term "variance of gradients" (VOG) may in the present context be understood as another example of a "confidence metric" that can be used to decide whether or not the associated sensor data should be annotated and/or further analysed offline. The VOG value is derived from the output from multiple versions (or "check points") of a machine learning algorithm, and in particular the relevancy maps of each output. In more detail, during an example training process of a machine learning algorithm, given a labelled training example, the ML algorithm makes a prediction. This prediction is compared to the label of the training example to give feedback to the neural network. This happens by shifting its internal parameters (also called weights) to values which would result in a prediction closer to the label for the given data instance. For a given training data set one typically trains a neural network by iterating over the entire data set many times. Each iteration is called an "epoch", and one can save the state of the neural network at the end of each epoch. This is often referred to as a "checkpoint". However, in an analogous manner one could train the neural network using different subsets of the entire data set, and save the state of the neural network after each subset. For example, assuming that one has 1 million of training examples, one could save the state of the neural network after every 1000 training examples in order to generate the multiple versions (or check points) of the neural network.

Given an image one used to make a prediction on with a ML algorithm (e.g., a neural network), one is often interested in seeing what the ML algorithm focused on. A well-known technique of doing so for a single image is to make a so-called relevancy map. The concept is easiest to illustrate for a neural network doing classification, but can easily be extended to more complex tasks. If one considers an image X that is fed to an ML algorithm, which predicts it is an instance of class A. One can now take the output of the final layer of the neural network and extract the value corresponding to the class A confidence, which is denoted as C(A). Computing the gradient of C(A) with respect to each pixel in the input image X (i.e. answering for each pixel individually how much changing this particular pixel affects the confidence for class A) gives a pixel-wise "relevancy map". In the end, one obtains a map where each pixel has either a high value, indicating that it is important for making the classification decision, or a low one, indicating it is not very important for making the classification decision. From this background, one can introduce the concept of "variance of gradients" (VOG). The idea is that several checkpoints of an ML algorithm (i.e. different versions of the ML algorithm before training was completed as well as the final version) are stored. Given an input image, a relevancy map is made for each of the checkpoints. Thus, if one has one input image and 10 training checkpoints one will obtain 10 relevancy maps. Subsequently the variance between the different relevancy maps is calculated, resulting in a single pixel-map with a variance per pixel. This is then averaged over all pixels into a single number called the variance of gradients (VOG). Thus, if an ML algorithm's output is associated with a high VOG score it could be used as an indicator that the ML algorithm is struggling with interpreting the input data, or that the data is simply out-of-distribution (OOD) with respect to its training data set.

In the context of the present disclosure, "out-of-distribution (OOD) data" and "in-distribution data" refer to two categories of data used for training and evaluating an ML algorithm. In-distribution data may be understood as samples or examples that belong to the same data distribution or domain as the training data of the ML algorithm. It represents data that the ML algorithm has been exposed to during its training phase. In more detail, in-distribution data is used to train and fine-tune the model, helping it learn patterns, features, and relationships specific to the task at hand. This data should be representative of the conditions and scenarios the model is expected to encounter during real-world operation. "Out-of-distribution data" may be understood as samples or examples that do not belong to the same data distribution as the training data of the ML algorithm. It represents scenarios, conditions, or situations that are different from what the ML algorithm has seen during training. OOD data can include rare or extreme events, novel scenarios, or data from domains that the model was not explicitly trained on.

In the context of the present disclosure, the term "annotation" refers to the process of labelling or marking specific objects, features, or attributes within data, typically images or videos, to create a labelled dataset for training and evaluating machine learning models. Annotations provide the ground truth or reference information that allows algorithms to learn and make predictions about objects, regions of interest, or characteristics within the data.

For example, for object detection tasks, annotation involves drawing bounding boxes around objects of interest in images or videos and/or specifying the class of the object (e.g., car, pedestrian, traffic sign). This labelled data is used to train ML algorithms to identify and locate objects in new data. Further, for semantic segmentation, each pixel in an image is labelled with a class identifier, assigning a category to every part of the image. This fine-grained labelling helps ML algorithms understand the layout and categories of objects within the image. Moreover, instance segmentation combines object detection and semantic segmentation. It not only identifies object categories but also assigns a unique identifier to each instance of the object, enabling models to distinguish between individual objects of the same class. In image classification tasks, each image in the dataset is labelled with a single class or category (e.g., "cat" or "dog"). This allows models to learn to classify new, unlabelled images into predefined categories.

### Embodiments

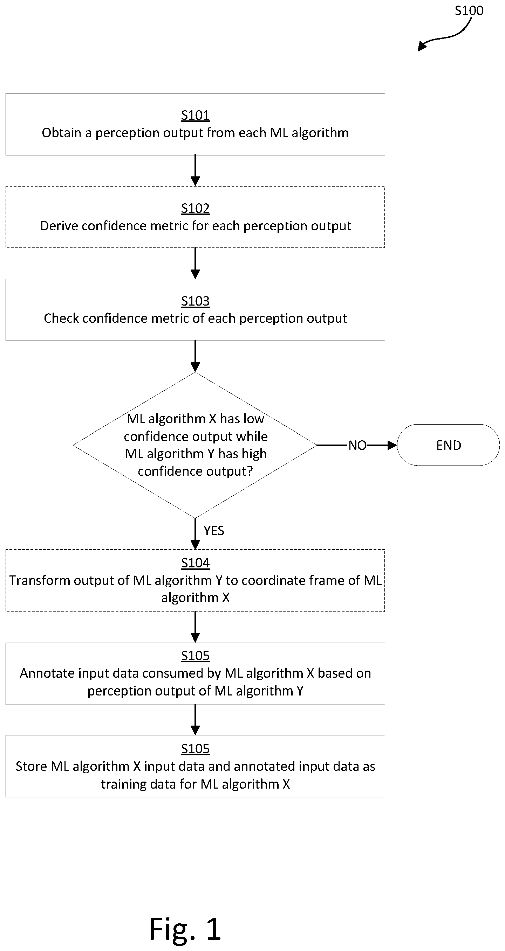

Fig. 1 is a schematic flowchart representation of a method S100 for a vehicle comprising a sensor system having a plurality of sensor devices for monitoring a surrounding environment of the vehicle. The method S100 is preferably a computer-implemented method S100, performed by a processing system of the ADS-equipped vehicle. The processing system may for example comprise one or more processors and one or more memories coupled to the one or more processors, wherein the one or more memories store one or more programs that perform the steps, services and functions of the method S100 disclosed herein when executed by the one or more processors.

The plurality of sensor devices comprises a plurality of subsets of sensor devices, each subset of sensor devices comprising a different subset of sensor devices of the plurality of sensor devices relative to other subsets of sensor devices. For example, a first subset of sensor devices may comprise a forward-facing camera, a second subset of sensor devices may comprise a forward-facing LiDAR, a third subset of sensor devices may comprise a forward-facing Radar and a forward-facing ultrasonic sensor, a fourth subset of sensor devices may comprise the forward-facing camera and the LiDAR, and so forth. Thus, the subsets may be overlapping, and comprise common sensor devices, but they may not have exactly the same set of sensor devices. Moreover, each subset of sensor devices of the plurality of sensor devices is related to a respective machine learning algorithm configured to consume an output from the related subset of sensor devices and to output a perception output. Here, the perception output is associated with a confidence metric. Accordingly, there are multiple machine-learning algorithms in the architecture, each accordingly being related to a respective subset of sensor devices.

The method S100 may comprise obtaining S100 a perception output from each machine learning algorithm. The method S100 further comprises in response to the confidence metric associated with a first perception output of a first machine learning algorithm being below a first confidence value and the confidence metric associated with a second perception output of a second machine learning algorithm exceeding a second confidence value for a common scene, annotating S105 sensor data consumed by the first machine learning algorithm to generate the first perception output based on the second perception output of the second machine learning algorithm. In other words, the method S100 comprises annotating S105 the sensor data of the common scene that the first machine learning algorithm consumed, in response to the confidence metric associated with a first perception output of a first machine learning algorithm being below a first confidence value and the confidence metric associated with a second perception output of a second machine learning algorithm exceeding a second confidence value for the common scene.

The terms "being below" and "exceeding" in the phrase "in response to the confidence metric associated with a first perception output of a first machine learning algorithm being below a first confidence value and the confidence metric associated with a second perception output of a second machine learning algorithm exceeding a second confidence value for the common scene" do not necessarily mean "being lower than" and "being higher than", respectively. Instead, it may be understood as "in response to the confidence metric associated with a first perception output of a first machine learning algorithm failing a first confidence condition and the confidence metric associated with a second perception output of a second machine learning algorithm fulfilling a second confidence condition for the common scene". This is because it will depend on the applied metric and whether or not "certainty" is indicated by high values of the applied metric or low values of the applied metric.

In some embodiments the first confidence value (first confidence threshold) is the same as the second confidence value (second confidence threshold). However, in some embodiments the first and second confidence values are different. For example, if the confidence metric is a "certainty value" (e.g., a percentage representing a degree of certainty of the output), the first confidence value/threshold may be 20%, 30%, 40%, or 50% while the second confidence value may be 80%, 90%, 95%, or 99%.

Analogously, if the confidence metric is a VOG value, the first confidence value/threshold may be 0.7, 0.8, or 0.9 while the second confidence value may be 0.4, 0.5, or 0.6. As mentioned before, when the "certainty" of the ML algorithm's output is indicated as a VOG score, a "certain" ML algorithm's output may be associated with a low VOG score and an "uncertain" ML algorithm's output may be associated with a high VOG score. Thus, in such cases, the method S100 may comprise in response to the VOG score associated with a first perception output of a first machine learning algorithm being higher than a first VOG value and the VOG score associated with a second perception output of a second machine learning algorithm being lower than a second VOG value for a common scene, annotating S105 sensor data consumed by the first machine learning algorithm to generate the first perception output based on the second perception output of the second machine learning algorithm. Similar reasoning may be applied when using "entropy" as a confidence metric, i.e., a high entropy value indicates uncertainty while a low entropy value indicates certainty. Naturally, one could also consider inverting the VOG values or entropy values such that a "low VOG score" or "low entropy score" indicates a low certainty while a "high VOG score" or "high entropy score" indicates a higher certainty.

However, as readily understood by the skilled artisan, the confidence values or thresholds that are applied may be different to those exemplified, and may be chosen in view of the applied confidence metric, maturity of the machine learning algorithms, and/or in view of specific use-cases.

Accordingly, the method S100 may comprise checking S103 the confidence metric of the perception output of each machine learning algorithm, and then annotating S105 the sensor data consumed by the first machine learning algorithm based on this check S103 assuming that the first machine learning algorithm's perception output failed the confidence check S103 while at least one other machine learning algorithm passed the confidence check S103. In other words, the output from the "certain" machine learning algorithm is used to generate annotations for subsequent training of the "uncertain" machine learning algorithm. Here it is assumed that each machine learning algorithm is configured to solve the same task. In particular, the task may be a perception task, e.g., object detection, object classification, road model estimation, semantic segmentation, instance segmentation, free-space estimation, and so forth.

Assuming an architecture comprising two machine learning models consuming inputs from two different sensors, e.g., LiDAR and camera, and solving the same perception task, e.g., object detection on lidar and vision data, respectively. Then, there may be scenarios where the ML algorithm consuming the output from a particular sensor generates an output associated with a low confidence metric (i.e., high uncertainty), while the machine learning algorithm consuming the output from the other sensor generates an output associated with a high confidence metric (i.e., low uncertainty). An example scenario would be detection of a far-away object where the output of the ML algorithm related to the LiDAR is likely associated with a low confidence metric, while the output of the ML algorithm related to the camera is likely associated with a high confidence metric. In such scenarios the herein disclosed technology could be used to auto-annotate the lidar point cloud with the vision detection. Consequently, embodiments herein provide a means for automatically generating large volumes of annotated data, whereupon one can train the ML algorithm related to the LiDAR to become more precise on sparse far-away objects.

Moreover, in some embodiments, the first machine learning algorithm is associated with a first subset of sensor devices of the plurality of sensor devices, and the second machine learning algorithm is associated with a second subset of sensor devices different from the first subset of sensor devices. For example, the first subset of sensor devices may comprise one or more cameras, while the second subset of sensor devices may comprise one or more LiDAR devices. Accordingly, each subset of the plurality of sensor devices may comprise one or more sensors of a specific sensor type of sensor modality. In more detail, each subset of sensor devices may be associated with a single sensor modality/type (e.g., visual, LiDAR, Radar, Ultrasonic, etc.) different from the sensor modality/type of the other subsets of sensor devices.

In some embodiments, the second subset of sensor devices (i.e., the sensor devices related to the second machine learning algorithm) comprises a single sensor device. In other words, the subset of sensor devices related to the second machine learning algorithm comprises a single sensor device. In some embodiments, each subset of sensor devices comprises a single sensor device. For example, a first subset of sensor devices may comprise a single camera, a second subset of sensor devices may comprise a single LiDAR, a third subset of sensor devices may comprise a single Radar, and so forth.

In some embodiments, the associated confidence metric is comprised in the perception output of the machine learning algorithm. For example, the perception output of a machine learning algorithm may comprise an uncertainty or certainty value indicating a confidence of the output. For a classification task this may mean that the machine learning algorithm outputs that a detected object has been classified as a truck with X % certainty or (1-X) % uncertainty.

However, in some embodiments, the confidence metric associated with the perception output of each machine learning algorithm is derived S102 based on a respective perception output and the sensor data consumed by each machine learning algorithm to generate the respective perception output. In other words, the method S100 may further comprise deriving S102 the confidence metric associated with the perception output of each machine learning algorithm based on a respective perception output, and, optionally, the sensor data consumed by each machine learning algorithm to generate the respective perception output. The confidence metric may accordingly comprise an entropy value, a VOG value, or the like. In other words, the confidence metric need not be directly comprised in the perception output, but could be derived based on the perception output and optionally the input to the machine leaning algorithm.

Moreover, in some embodiments, the confidence metric is a first confidence metric, and the perception output is further associated with a second confidence metric. Thus, the method S100 may comprise evaluation S103 of multiple confidence metrics. Each confidence metric may be evaluated S103 in view of a respective criterion. Thus, the method S100 may comprise in response to the first confidence metric associated with a first perception output failing a first condition, the second confidence metric associated with the first perception output fulfilling a second condition, the first confidence metric associated with the second perception output fulfilling a third condition, and the second confidence metric associated with a second perception output fulfilling a fourth condition for a common scene, annotating S105 the sensor data consumed by the first machine learning algorithm to generate the first perception output based on the second perception output.

In some embodiments, the first condition is that the first confidence metric (e.g., certainty/entropy) should be below/above a first value (or "fail a first confidence condition"), the second condition is that the second confidence metric (e.g., VOG) should be below a second value (or "fulfil a second confidence condition"), the third condition is that the first confidence metric (e.g., certainty/entropy) should be above/below a third value (or "fulfil a third confidence condition"), and the fourth condition is that the second confidence metric (e.g., VOG) should be below a fourth value (or "fulfil a fourth confidence condition"). The first value and the third value may be the same value, but they may also be different values. In some embodiments, the second value and the fourth value are the same value.

In a more illustrative example, the first confidence metric may be a certainty value and the second confidence metric may be a VOG value. Accordingly, if the first perception output is associated with a low certainty value (e.g., below 80%, 70%, 60%, 50%, 40%, 30%, 20%, or 10%) and with a low VOG value (e.g., below 0.5, 0.4, 0.3, 0.2, or 0.1), while the second perception output is associated with a high certainty value (e.g., above 80%, 90%, or 95%) and with a low VOG value (e.g., below 0.5, 0.4, 0.3, 0.2, or 0.1). Then, the sensor data consumed by the first machine learning algorithm to generate the first perception output can be annotated based on the second perception output. In other words, the annotation S105 may be performed in response to the first perception output of the first machine learning algorithm being associated with a certainty value below a threshold and a VOG value below a threshold, and the second perception output of the second machine learning algorithm being associated with a certainty value above a threshold and a VOG value below a threshold.

This is an example where a VOG condition is provided in addition to a certainty condition to improve the likelihood of capturing high-value training data (e.g., edge cases or corner cases) for the first machine learning algorithm. This is because a low VOG value indicates that the scene or scenario is "in distribution" for the first machine learning algorithm, and that it should have been able to make an accurate prediction.

Further, in some embodiments, the method S100 further comprises in response to the confidence metric associated with the first perception output of the first machine learning algorithm being below the first confidence value and the confidence metric associated with the second perception output of the second machine learning algorithm exceeding the second confidence value for a common scene, transforming S104 the perception output of the second machine learning algorithm to a coordinate frame of the first machine learning algorithm prior to the annotation S105. In other words, the output of the "certain" machine learning algorithm is transformed S104 to the coordinate frame of the output from the "uncertain" machine learning prior to the annotation S105. This may for example be relevant when the output from one machine learning algorithm is in a 2D image plane (e.g., camera image), while the other output is in a 3D coordinate frame (LiDAR point cloud).

In an illustrative example the perception output of the second ML algorithm is assumed to be a LiDAR point cloud (3D coordinate frame) while the perception output of the first ML algorithm is assumed to be a monocular camera image (2D coordinate frame), i.e., 3D to 2D transformation. In order to perform the transformation S104, it is assumed that the intrinsic parameters of the camera (e.g., focal length, principal point) and LiDAR (e.g., scan angle) are calibrated accurately. Further, it is assumed that relative position and orientation of the LiDAR and camera with respect to each other is calibrated (extrinsic calibration). Then, for each LiDAR point, the extrinsic calibration parameters and are used to transform the 3D LiDAR point into a 3D coordinate system of the camera. This transformation may involve a rotation and translation step. Next, the transformed 3D point is projected onto the 2D image plane of the camera (perspective projection) using the intrinsic calibration parameters. This ensures that the LiDAR points align correctly within the same coordinate frame (i.e., the coordinate frame of the first ML algorithm). The process is analogous for the 2D to 3D projection. The transformation S104 enables for automated and accurate annotations of the sensor data regardless of the sensor modalities used in the architecture.

It should be noted that the embodiments disclosed herein are not limited to single frame evaluation/annotation, but also encompasses frame/data sequences, and annotation thereof.

Accordingly, the sensor data annotation S105 may be single-frame annotation or data-sequence annotation. However, in the data-sequence annotation it should be noted that the annotation may still performed for each frame in the sequence. Accordingly, the machine learning algorithms may be configured to consume and single data frames or entire sequences of data. Moreover, it should be noted that the plurality of machine learning algorithms different from each other in that one or more machine learning algorithms consume and output single data frames while other machine learning algorithms consume and output data sequences. However, regardless of the configuration of the machine learning algorithms (single data frames or data sequences, the comparison of the confidence metric is still performed on a per-frame basis.

As readily understood by the skilled person, the transformation S104 may be performed regardless if single or multiple confidence metrics are evaluated S103. In other words, the method S100 may comprise in response to the first confidence metric associated with a first perception output failing a first condition, the second confidence metric associated with the first perception output fulfilling a second condition, the first confidence metric associated with the second perception output fulfilling a third condition, and the second confidence metric associated with a second perception output fulfilling a fourth condition for a common scene, transforming S104 the perception output of the second machine learning algorithm to a coordinate frame of the first machine learning algorithm prior to the annotation.

Further, in some embodiments, the method S100 comprises storing S106 the annotated S105 sensor data consumed by the first machine learning algorithm to generate the first perception output and the sensor data consumed by the first machine learning algorithm to generate the first perception output for subsequent training and/or verification of the first machine-learning algorithm. In other words, the method S100 may comprise storing S106 the training example comprising the input data and the annotated data (ground truth) for subsequent training and/or verification of the first machine-learning algorithm. The stored S106 data may subsequently be transmitted to a remote server (e.g., fleet management system, back-office system, etc) for offline training of the first machine learning algorithm. However, in some embodiments, a federated learning scheme is applied where the first machine learning algorithm is trained at the edge (i.e., in the vehicle) whereupon the updated version of the first machine learning algorithm is transmitted to the remote server for consolidation.

Executable instructions for performing these functions are, optionally, included in a non-transitory computer-readable storage medium or other computer program product configured for execution by one or more processors.

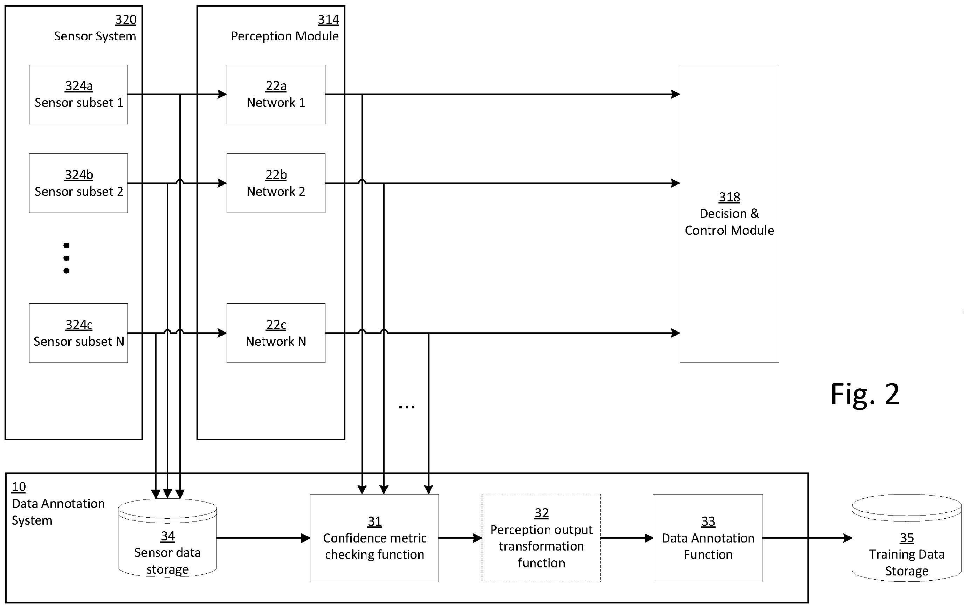

Fig. 2 is a schematic block diagram representation of an annotation system 10 for a vehicle 1 in accordance with some embodiments. The system 10 comprises control circuitry (e.g. one or more processors) configured to perform the functions of the method S100 disclosed herein, where the functions may be included in a non-transitory computer-readable storage medium 12 or other computer program product configured for execution by the control circuitry 11. In other words, the system 10 comprises one or more memory storage areas 12 comprising program code, the one or more memory storage areas 12 and the program code configured to, with the one or more processors 11, cause the system 10 to perform the method S100 according to any one of the embodiments disclosed herein. However, in order to better elucidate the herein disclosed embodiments, the control circuitry is represented as various "functions" or blocks in Fig. 2, each of them linked to one or more specific functions of the control circuitry.

The vehicle 1 comprises a sensor system 320 comprising a plurality of sensor devices for monitoring a surrounding environment of the vehicle. The plurality of sensor devices comprises a plurality of subsets of sensor devices 324a-c, where each subset of sensor devices 324a-c comprises a different subset of sensor devices 324a-c of the plurality of sensor devices relative to other subsets of sensor devices. In other words, no subset of sensor devices 324a-c includes exactly the same sensor devices as any of the other subsets of sensor devices 342a-c. In some embodiments, each subset of sensor devices 324a-c comprises a single sensor device.

Moreover, each subset of sensor devices 324a-c of the plurality of sensor devices 324a-c is related to a respective machine learning algorithm ("Network") 22a-c configured to consume an output from the related subset of sensor devices 324a-c and to output a perception output. Moreover, the perception output of each machine learning algorithm 22a-c is associated with a respective confidence metric. The machine learning algorithms 22a-c may be comprised in the ADS's perception system stack 314.

The control circuitry 11 is configured to in response to the confidence metric associated with a first perception output of a first machine learning algorithm 22a being below a first confidence value and the confidence metric associated with a second perception output of a second machine learning algorithm 22b exceeding a second confidence value for a common scene, annotate sensor data consumed by the first machine learning algorithm 22a to generate the first perception output based on the second perception output of the second machine learning algorithm 22b. In other words, the control circuitry 11 may be configured to execute a data annotation function 33. In some embodiments, first machine learning algorithm 22a is associated with a first subset of sensor devices 324a of the plurality of sensor devices 324a-c, and the second machine learning algorithm 22b is associated with a second subset of sensor devices 324b different from the first subset of sensor devices 324a. In some embodiments, the second subset of sensor devices 324b comprises a single sensor device.

Further, the annotation system 10 may comprise a sensor data storage 34 to store the sensor data that is output from each subset of sensor devices 324a-c. The sensor data storage 34 may be a data buffer of a suitable size or "length" or any other suitable memory storage area, to allow for real-time or near real-time evaluation and annotation. In other words, the control circuitry 11 may be configured to (continuously) store the output from each subset of sensor devices 324a-c

Moreover, the control circuitry 11 may be configured to check or evaluate the associated confidence metric of each perception output in order to check for fulfilment or failure of one or more confidence metric conditions. For example, the control circuitry 11 may be configured to evaluate the associated confidence metric of each perception output to check if any confidence metric is below a first confidence value and if any confidence metric is above a second confidence value for a common scene. In other words, the control circuitry 11 may be configured to execute a confidence metric checking/evaluating function 31. Moreover, as described in the foregoing, the perception output of each machine learning algorithm 22a-c may be associated with multiple confidence metrics, and the control circuitry 11 may be configured to evaluate each of them in view of a corresponding criterion/condition.

Furthermore, the control circuitry 11 may be configured to execute a perception output transformation function to transform the perception output of one machine learning algorithm 22a-c to a coordinate frame of another machine learning algorithm 22a-c. In more detail, the control circuitry 11 may be configured to in response to the confidence metric associated with the first perception output of the first machine learning algorithm 22a being below the first confidence value and the confidence metric associated with the second perception output of the second machine learning algorithm 22b exceeding the second confidence value for a common scene, transform the perception output of the second machine learning algorithm 22b to a coordinate frame of the first machine learning algorithm 22a prior to the annotation.

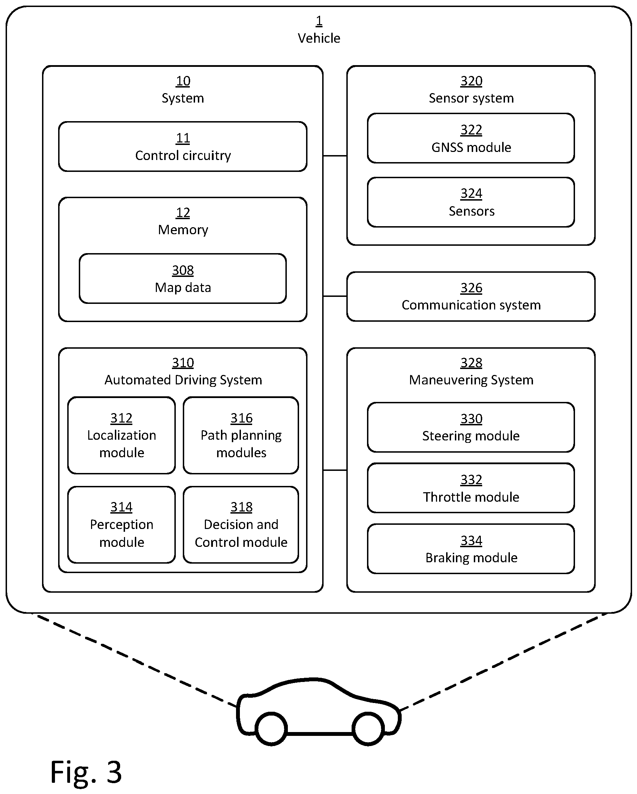

Fig. 3 is a schematic illustration of an ADS-equipped vehicle 1 comprising such a system 10. As used herein, a "vehicle" is any form of motorized transport. For example, the vehicle 1 may be any road vehicle such as a car (as illustrated herein), a motorcycle, a (cargo) truck, a bus, etc.

The system 10 comprises control circuitry 11 and a memory 12. The control circuitry 11 may physically comprise one single circuitry device. Alternatively, the control circuitry 11 may be distributed over several circuitry devices. As an example, the apparatus 10 may share its control circuitry 11 with other parts of the vehicle 1 (e.g. the ADS 310). Moreover, the system 10 may form a part of the ADS 310, i.e. the system 10 may be implemented as a module or feature of the ADS. The control circuitry 11 may comprise one or more processors, such as a central processing unit (CPU), microcontroller, or microprocessor. The one or more processors may be configured to execute program code stored in the memory 12, in order to carry out various functions and operations of the vehicle 1 in addition to the methods disclosed herein. The processor(s) may be or include any number of hardware components for conducting data or signal processing or for executing computer code stored in the memory 12. The memory 12 optionally includes high-speed random-access memory, such as DRAM, SRAM, DDR RAM, or other random-access solid-state memory devices; and optionally includes non-volatile memory, such as one or more magnetic disk storage devices, optical disk storage devices, flash memory devices, or other non-volatile solid-state storage devices. The memory 12 may include database components, object code components, script components, or any other type of information structure for supporting the various activities of the embodiments disclosed herein.

In the illustrated example, the memory 12 further stores map data 308. The map data 308 may for instance be used by the ADS 310 of the vehicle 1 in order to perform autonomous functions of the vehicle 1. The map data 308 may comprise high-definition (HD) map data. It is contemplated that the memory 12, even though illustrated as a separate element from the ADS 310, may be provided as an integral element of the ADS 310. In other words, according to an exemplary embodiment, any distributed or local memory device may be utilized in the realization of the present inventive concept. Similarly, the control circuitry 11 may be distributed e.g. such that one or more processors of the control circuitry 11 is provided as integral elements of the ADS 310 or any other system of the vehicle 1. In other words, according to an exemplary embodiment, any distributed or local control circuitry device may be utilized in the realization of the present inventive concept. The ADS 310 is configured carry out the functions and operations of the autonomous or semi-autonomous functions of the vehicle 1. The ADS 310 can comprise a number of modules, where each module is tasked with different functions of the ADS 310.

The vehicle 1 comprises a number of elements which can be commonly found in autonomous or semi-autonomous vehicles. It will be understood that the vehicle 1 can have any combination of the various elements shown in Fig. 3. Moreover, the vehicle 1 may comprise further elements than those shown in Fig. 3. While the various elements are herein shown as located inside the vehicle 1, one or more of the elements can be located externally to the vehicle 1. For example, the map data may be stored in a remote server and accessed by the various components of the vehicle 1 via the communication system 326. Further, even though the various elements are herein depicted in a certain arrangement, the various elements may also be implemented in different arrangements, as readily understood by the skilled person. It should be further noted that the various elements may be communicatively connected to each other in any suitable way. The vehicle 1 of Fig. 3 should be seen merely as an illustrative example, as the elements of the vehicle 1 can be realized in several different ways.

The vehicle 1 further comprises a sensor system 320. The sensor system 320 is configured to acquire sensory data about the vehicle itself, or of its surroundings. The sensor system 320 may for example comprise a Global Navigation Satellite System (GNSS) module 322 (such as a GPS) configured to collect geographical position data of the vehicle 1. The sensor system 320 may further comprise one or more sensors 324. The sensor(s) 324 may be any type of on-board sensors, such as cameras, LIDARs and RADARs, ultrasonic sensors, gyroscopes, accelerometers, odometers etc. It should be appreciated that the sensor system 320 may also provide the possibility to acquire sensory data directly or via dedicated sensor control circuitry in the vehicle 1.

The vehicle 1 further comprises a communication system 326. The communication system 326 is configured to communicate with external units, such as other vehicles (i.e. via vehicle-to-vehicle (V2V) communication protocols), remote servers (e.g. cloud servers), databases or other external devices, i.e. vehicle-to-infrastructure (V2I) or vehicle-to-everything (V2X) communication protocols. The communication system 326 may communicate using one or more communication technologies. The communication system 326 may comprise one or more antennas (not shown). Cellular communication technologies may be used for long range communication such as to remote servers or cloud computing systems. In addition, if the cellular communication technology used have low latency, it may also be used for V2V, V2I or V2X communication. Examples of cellular radio technologies are GSM, GPRS, EDGE, LTE, 5G, 5G NR, and so on, also including future cellular solutions. However, in some solutions mid to short range communication technologies may be used such as Wireless Local Area (LAN), e.g. IEEE 802.11 based solutions, for communicating with other vehicles in the vicinity of the vehicle 1 or with local infrastructure elements. ETSI is working on cellular standards for vehicle communication and for instance 5G is considered as a suitable solution due to the low latency and efficient handling of high bandwidths and communication channels.

The communication system 326 may accordingly provide the possibility to send output to a remote location (e.g. remote operator or control center) and/or to receive input from a remote location by means of the one or more antennas. Moreover, the communication system 326 may be further configured to allow the various elements of the vehicle 1 to communicate with each other. As an example, the communication system may provide a local network setup, such as CAN bus, I2C, Ethernet, optical fibers, and so on. Local communication within the vehicle may also be of a wireless type with protocols such as WiFi, LoRa, Zigbee, Bluetooth, or similar mid/short range technologies.

The vehicle 1 further comprises a maneuvering system 320. The maneuvering system 328 is configured to control the maneuvering of the vehicle 1. The maneuvering system 328 comprises a steering module 330 configured to control the heading of the vehicle 1. The maneuvering system 328 further comprises a throttle module 332 configured to control actuation of the throttle of the vehicle 1. The maneuvering system 328 further comprises a braking module 334 configured to control actuation of the brakes of the vehicle 1. The various modules of the maneuvering system 328 may also receive manual input from a driver of the vehicle 1 (i.e. from a steering wheel, a gas pedal and a brake pedal respectively). However, the maneuvering system 328 may be communicatively connected to the ADS 310 of the vehicle, to receive instructions on how the various modules of the maneuvering system 328 should act. Thus, the ADS 310 can control the maneuvering of the vehicle 1, for example via the decision and control module 318.

The ADS 310 may comprise a localization module 312 or localization block/system. The localization module 312 is configured to determine and/or monitor a geographical position and heading of the vehicle 1, and may utilize data from the sensor system 320, such as data from the GNSS module 322. Alternatively, or in combination, the localization module 312 may utilize data from the one or more sensors 324. The localization system may alternatively be realized as a Real Time Kinematics (RTK) GPS in order to improve accuracy.

The ADS 310 may further comprise a perception module 314 or perception block/system 314. The perception module 314 may refer to any commonly known module and/or functionality, e.g. comprised in one or more electronic control modules and/or nodes of the vehicle 1, adapted and/or configured to interpret sensory data - relevant for driving of the vehicle 1 - to identify e.g. obstacles, vehicle lanes, relevant signage, appropriate navigation paths etc. The perception module 314 may thus be adapted to rely on and obtain inputs from multiple data sources, such as automotive imaging, image processing, computer vision, and/or in-car networking, etc., in combination with sensory data e.g. from the sensor system 320.

The localization module 312 and/or the perception module 314 may be communicatively connected to the sensor system 320 in order to receive sensory data from the sensor system 320. The localization module 312 and/or the perception module 314 may further transmit control instructions to the sensor system 320.

The ADS 310 may further comprise a path planning module 316 configured to generate candidate paths for the vehicle to execute as known in the art. More specifically, the path planning module 316 may receive the output from the perception module 314 and the localization module 312 as input and then output candidate paths to the decision and control module 318 for subsequent execution.

The herein disclosed technology has been presented above with reference to specific embodiments. However, other embodiments than the above described are possible and within the scope of the herein disclosed technology. Different method steps than those described above, performing the method by hardware or software, may be provided within the scope of the invention. Thus, according to some embodiments, there is provided a non-transitory computer-readable storage medium storing one or more programs configured to be executed by one or more processors of a vehicle control system, the one or more programs comprising instructions for performing the method according to any one of the above-discussed embodiments. Alternatively, according to some embodiments a cloud computing system can be configured to perform any of the methods presented herein. The cloud computing system may comprise distributed cloud computing resources that jointly perform the methods presented herein under control of one or more computer program products.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

The processor(s) 11 (associated with the system 10) may be or include any number of hardware components for conducting data or signal processing or for executing computer code stored in memory 12. The device 10 has an associated memory 12, and the memory 12 may be one or more devices for storing data and/or computer code for completing or facilitating the various methods described in the present description. The memory may include volatile memory or non-volatile memory. The memory 12 may include database components, object code components, script components, or any other type of information structure for supporting the various activities of the present description. According to an exemplary embodiment, any distributed or local memory device may be utilized with the systems and methods of this description. According to an exemplary embodiment the memory 12 is communicably connected to the processor 11 (e.g., via a circuit or any other wired, wireless, or network connection) and includes computer code for executing one or more processes described herein.

Accordingly, it should be understood that parts of the described solution may be implemented either in the vehicle 1, in a system located external the vehicle 1, or in a combination of internal and external the vehicle. For instance, in a server in communication with the vehicle, a so-called cloud solution. For instance, the perception output from each ML algorithm may be sent to an external system that performs the confidence metric evaluation and/or annotation. The different features and steps of the embodiments may be combined in other combinations than those described.

It should be noted that any reference signs do not limit the scope of the claims, that the invention may be at least in part implemented by means of both hardware and software, and that several "means" or "units" may be represented by the same item of hardware.

Although the figures may show a specific order of method steps, the order of the steps may differ from what is depicted. In addition, two or more steps may be performed concurrently or with partial concurrence. Such variation will depend on the software and hardware systems chosen and on designer choice. All such variations are within the scope of the invention. Likewise, software implementations could be accomplished with standard programming techniques with rule-based logic and other logic to accomplish the various obtaining, deriving, checking, evaluating, transforming, annotating, storing, and transmitting steps. The above mentioned and described embodiments are only given as examples and should not be limiting to the present invention. Other solutions, uses, objectives, and functions within the scope of the invention as claimed in the below described claims should be apparent for the person skilled in the art.

## Claims

1. A computer-implemented method (S100) for a vehicle comprising a sensor system having a plurality of sensor devices for monitoring a surrounding environment of the vehicle, wherein the plurality of sensor devices comprises:
a plurality of subsets of sensor devices (324a-c), each subset of sensor devices comprising a different subset of sensor devices of the plurality of sensor devices relative to other subsets of sensor devices, and
wherein each subset of sensor devices of the plurality of sensor devices is related to a respective machine learning algorithm (22a-c) configured to consume an output from the related subset of sensor devices and to output a perception output, the perception output being associated with a confidence metric;
wherein the method comprises:
in response to the confidence metric associated with a first perception output of a first machine learning algorithm being below a first confidence value and the confidence metric associated with a second perception output of a second machine learning algorithm exceeding a second confidence value for a common scene:
annotating (S105) sensor data consumed by the first machine learning algorithm to generate the first perception output based on the second perception output of the second machine learning algorithm.

2. The method (S100) according to claim 1, wherein the first machine learning algorithm is associated with a first subset of sensor devices of the plurality of sensor devices, and the second machine learning algorithm is associated with a second subset of sensor devices different from the first subset of sensor devices.

3. The method (S100) according to claim 2, wherein the second subset of sensor devices comprises a single sensor device.

4. The method (S100) according to any one of claims 1-3, wherein each subset of sensor devices comprises a single sensor device.

5. The method (S100) according to any one of claims 1-4, further comprising:
in response to the confidence metric associated with the first perception output of the first machine learning algorithm being below the first confidence value and the confidence metric associated with the second perception output of the second machine learning algorithm exceeding the second confidence value for a common scene:
transforming (S104) the perception output of the second machine learning algorithm to a coordinate frame of the first machine learning algorithm prior to the annotation.

6. The method (S100) according to any one of claims 1-5, further comprising:
deriving (S102) the confidence metric associated with the perception output of each machine learning algorithm based on a respective perception output and the sensor data consumed by each machine learning algorithm to generate the respective perception output.

7. The method (S100) according to any one of claims 1-5, wherein the perception output comprises the associated confidence metric.

8. A computer program product comprising instructions which, when the program is executed by a computer, causes the computer to carry out the method (S100) according to any one of claims 1-7.

9. A computer-readable storage medium comprising instructions which, when executed by a computer, causes the computer to carry out the method (S100) according to any one of claims 1-7.

10. An annotation system (10) for a vehicle (1) comprising a sensor system (320) having a plurality of sensor devices for monitoring a surrounding environment of the vehicle, wherein the plurality of sensor devices comprises:
a plurality of subsets of sensor devices (324a-c), each subset of sensor devices comprising a different subset of sensor devices of the plurality of sensor devices relative to other subsets of sensor devices, and
wherein each subset of sensor devices of the plurality of sensor devices is related to a respective machine learning algorithm (22a-c) configured to consume an output from the related subset of sensor devices and to output a perception output, the perception output being associated with a confidence metric;
control circuitry (11) configured to:
in response to the confidence metric associated with a first perception output of a first machine learning algorithm being below a first confidence value and the confidence metric associated with a second perception output of a second machine learning algorithm exceeding a second confidence value for a common scene:
annotate sensor data consumed by the first machine learning algorithm to generate the first perception output based on the second perception output of the second machine learning algorithm.

11. The annotation system (10) according to claim 10, wherein the first machine learning algorithm is associated with a first subset of sensor devices of the plurality of sensor devices, and the second machine learning algorithm is associated with a second subset of sensor devices different from the first subset of sensor devices.

12. The annotation system (10) according to claim 11, wherein the second subset of sensor devices comprises a single sensor device.

13. The annotation system (10) according to any one of claims 10-12, wherein each subset of sensor devices comprises a single sensor device.

14. The annotation system (10) according to any one of claims 10-13, wherein the control circuitry (11) is further configured to:
in response to the confidence metric associated with the first perception output of the first machine learning algorithm being below the first confidence value and the confidence metric associated with the second perception output of the second machine learning algorithm exceeding the second confidence value for a common scene:
transform the perception output of the second machine learning algorithm to a coordinate frame of the first machine learning algorithm prior to the annotation.

15. A vehicle (1) comprising the annotation system (10) according to any one of claims 10-14.
